# EUROPEAN PATENT SPECIFICATION

(11) **EP 4 186 760 B1**
(45) Date of publication and mention of the grant of the patent: **25.09.2024**
(21) Application number: 21211098.5
(22) Date of filing: 29.11.2021
(51) Int. Cl.: B60T 13/68, B60T 17/18

(54) **A REDUNDANT CONTROL SYSTEM FOR A FIRST AND A SECOND BRAKE ACTUATOR OF A VEHICLE**
REDUNDANTES STEUERUNGSSYSTEM FÜR EINEN ERSTEN UND EINEN ZWEITEN BREMSZYLINDER EINES FAHRZEUGS
PROCÉDÉ DE CONTRÔLE REDONDANT POUR UN PREMIER ET UN SECOND ACTIONNEUR DE FREIN D'UN VÉHICULE

(43) Date of publication of application: 31.05.2023
(73) Proprietor: KNORR-BREMSE Systeme für Nutzfahrzeuge GmbH, 80809 München (DE)
(72) Inventor: MERZA, Valér, 2000 Szentendre (HU); GREBE, Jan, 82319 Munich (DE); THUM, Daniel, 81927 Munich (DE); KOMLÓS, Tamás, 6448 Csávoly (HU)
(74) Representative: LifeTech IP Spies & Behrndt Patentanwälte PartG mbB

(56) References cited:
- DE-A1- 102012 025 400
- DE-A1- 102016 005 318
- DE-A1- 102020 108 072

## Description

The present invention relates to a redundant control system for a first and a second brake actuator of a vehicle, a method for redundantly controlling a first and a second brake actuator of a vehicle, and in particular to a redundant braking system.

In view of the increasing digitization (e.g. in telematics) and automation of motor vehicles towards highly automated or autonomous driving, functions of the driver must be at least partially adopted or replaced by the vehicle system automation system. In addition, the automation requires an integration of additional functions, sensors and other electrical subsystems. As vehicles are automated, general acceptance or tolerance of road accidents will drop severely, as road fatalities and injuries caused by machines will not be as accepted as driver error. This applies in particular to commercial vehicles, including those comprising a tractor and a trailer. On the other hand, with the increased worth of the trailer the availability of the trailer will become increasingly more important to the operator. This means that compared to state-of-the-art vehicles, the level of safety must be increased, the availability and performance of critical functions ensured, and the error rate reduced.

One of the extremely critical functions in driving a vehicle is safe braking. In view of the automation and braking automation, there is a demand for a system that is able to brake the vehicle safely in presence of failure and errors.

In this context, DE 10 2016 005318 A1 discloses a brake system with two brake circuits and a bypass valve to provide a redundancy. DE 10 2012 025400 A1 discloses a parking brake with an exhaust for an emergency activation. DE 10 2020 108075 A1 discloses a brake system with a backup pressure supply.

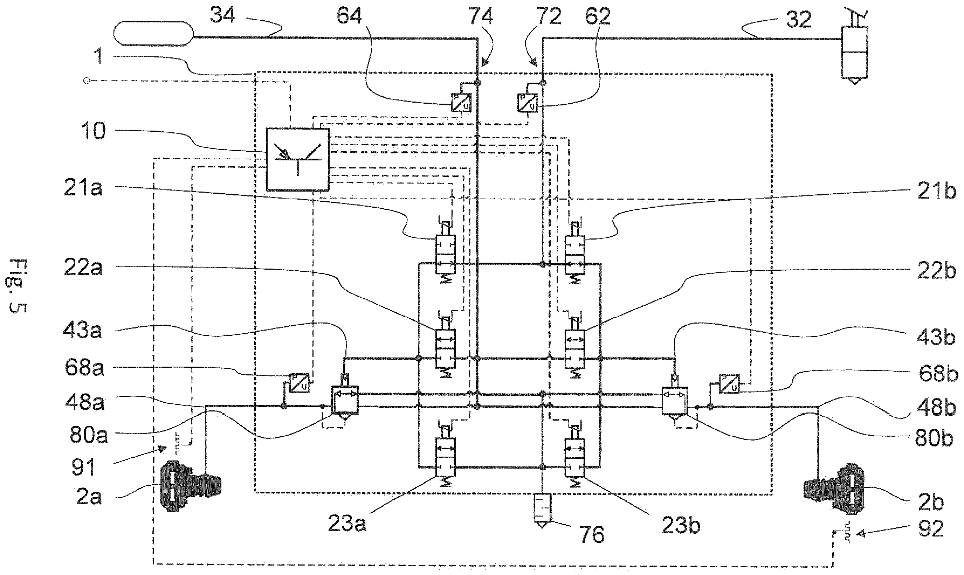

**Fig. 5** depicts a conventional control system 1 for a first brake actuator 2a and a second brake actuator 2b in a towed vehicle. The control system 1 is comprised in a braking system and hosted in a unit having a control pressure port 72 for providing a control pressure 32, and a supply pressure port 74 for providing a supply pressure 34. The unit further comprises a port to provide a first brake pressure 48a to the first brake actuator 2a, and a port to provide a second brake pressure 48b to the second brake actuator 2b. The control pressure 32 and the supply pressure 34 may be obtained via the standard pneumatic connections between motor vehicles and towed vehicles, wherein the supply pressure 34 is constantly provided, while the control pressure 32 is provided for service brake actions, i.e. on specific demand by a driver or by a superordinate system. The superordinate system may be located on the vehicle, on a towing vehicle, or in parts on both. The unit also comprises an exhaust port 76 to release pressure into an environment. In figures in this text, long-dashed connections correspond to electric power or data connections, while line connections reflect to pneumatic connections.

The control system 1 comprises an electronic control unit 10, connected to a power supply and optionally configured with a data connection in order to exchange (receive and/or transmit) information with a further electronic component of the vehicle and/or of other vehicles, in particular - if the control system 1 is implemented in a towed vehiclein a towing vehicle. The control system 1 further comprises a first valve assembly 20a, which is operated by the electronic control unit 10 to provide a first delivery pressure 43a for operating a first relay valve 80a. The control system 1 also comprises a second valve assembly 20b operated by the electronic control unit 10, which is configured to provide a second delivery pressure 43b for operating a second relay valve 80b.

The first relay valve 80a and the second relay valve 80b are connected directly to the supply pressure port 74, and configured to provide, based on the supply pressure 32, a first brake pressure 48a and a second brake pressure 48b. In this, the first relay valve 80a and the second relay valve 80b are controlled by the first delivery pressure 43a and the second delivery pressure 43b, respectively. The first and the second valve assembly 20a, 20b each comprise a first valve 21a, 21b, which is configured to provide the control pressure 32 as the first and second delivery pressure 43a, 43b, respectively. The first and the second valve assembly 20a, 20b furthermore each comprise a second valve 22a, 22b, which is configured to provide the supply pressure 34 as the first and second delivery pressure 43a, 43b, respectively. In addition, the first and second valve assemblies 20a, 20b each comprise a third valve 23a, 23b, which is configured to exhaust both the first and the second delivery pressure 43a, 43b via the exhaust port 76.

The electronic control unit 10 is configured to operate the valves 21a, 21b, 22a, 22b, 23a, 23b of the first and the second valve assembly 20a, 20b. Furthermore, the electronic control unit 10 is configured to receive information from a control pressure sensor 62, a supply pressure sensor 64, a first brake control pressure sensor 68a, a second brake control pressure sensor 68b, a first wheel speed sensor 91, and a second wheel speed sensor 92, and to operate the first and second valve assemblies 20a, 20b based on this information.

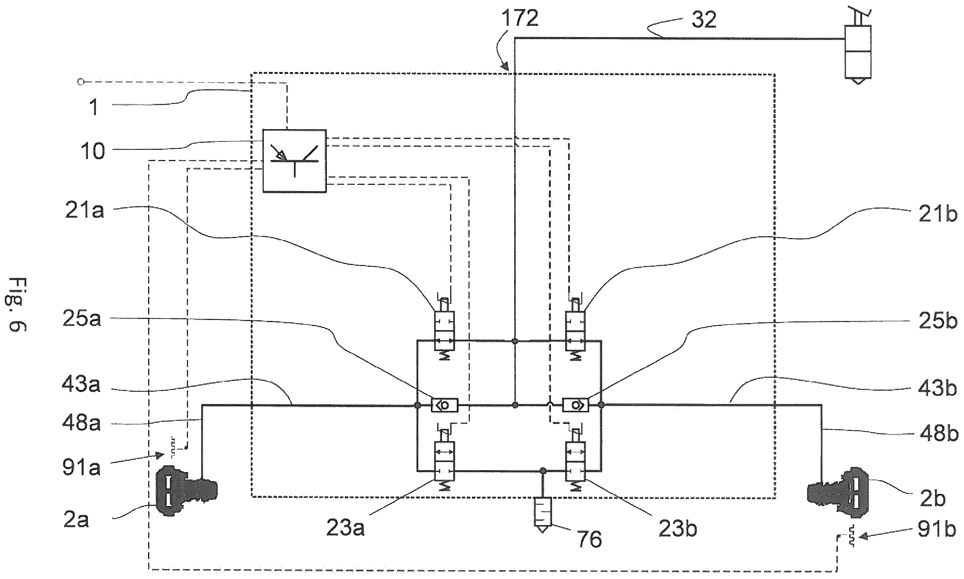

**Fig. 6** depicts a further conventional control system 1. The control system 1 is hosted in a unit with a control pressure port 72 for providing a control pressure 32. Again, a first valve assembly 20a and a second valve assembly 20b provide a first delivery pressure 43a and a second delivery pressure 43b, respectively, which in this example actuate the first brake actuator 2a and the second brake actuator 2b directly as the first and second brake pressure 48a, 48b. Accordingly, the example depicted in this figure does not comprise relay valves. However, the first valve assembly 20a and the second valve assembly 20b each comprise a check valve 25a, 25b which is configured to limit the first and second delivery pressure 43a, 43b, respectively. Such an arrangement may be present e.g. in an anti-lock braking system, ABS.

The braking systems depicted in Figs. 5 and 6 each represent a two-channel, or in general multi-channel, braking system, which can provide the first brake pressure 48a to the first brake actuator 2a and the second delivery pressure 48b to the second actuator 2b independently from each other.

Such a multi-channel system may exhibit a broad range of malfunctions, including e.g. a power supply failure, malfunctions of the electronic control unit, errors in sensor signals or sensor readings, leaks in pressure lines, or malfunctions of valves. If a malfunction occurs, the braking system may lose all electronic functionality, and revert to a purely pneumatic mode of operation. In consequence, load dependent braking, communication with other control units (e.g. between the towing and towed vehicle), and an electronic stabilization (as e.g. in an ABS or role stability program, RSP, function) may be severely compromised, and brake response time may be significantly increased.

Therefore there is a demand for a control system of brake actuators adapted to overcome such failures of the braking system due to malfunctions.

At least to some extent, the problems of conventional systems as described above are overcome by a redundant control system of claim 1, a braking system of claim 14, and a method according to claim 15. The dependent claims refer to further advantageous realizations of the subject matter of the independent claims.

The present invention relates to a redundant control system for controlling at least a first delivery pressure for a first brake actuator and, at least, a second delivery pressure for a second brake actuator of a vehicle. The brake actuators may in particular operate pneumatically. The redundant control system comprises a first electronic control unit and a first valve assembly, wherein the first valve assembly is controlled by the first electronic control unit and configured to provide a first pressure. The redundant control system also comprises at least a second electronic control unit and a second valve assembly, wherein the second valve assembly is controlled by the second electronic control unit and configured to provide a second pressure. The redundant control system further comprises a first selector valve which is controlled by the first electronic control unit and configured to provide the second delivery pressure for the second brake actuator by selecting either the first pressure or the second pressure. Likewise, the redundant control system comprises a second selector valve controlled by the second electronic control unit, which is configured to provide the first delivery pressure for the first brake actuator by selecting either the first pressure or the second pressure.

In embodiments, the first selector valve and the second selector valve may be implemented in a number of ways to achieve the required functionality. E.g., the first selector valve may be implemented by two 2/2-way valves, operable to block either the first pressure or the second pressure. The implementation of the first selector valve may differ from an implementation of the second selector valve.

In embodiments, the vehicle is a commercial vehicle or a vehicle combination with a tractor and a trailer, and in particular a long-haul vehicle. The vehicle may also be merely a trailer or towed vehicle. The towed vehicle may, however, still be selfpropelled. The vehicle may in particular be a single-axle semi-trailer, or a center-axle trailer. In embodiments, the vehicle comprises a first wheel, configured to receive a braking force from the first brake actuator, and a second wheel, configured to receive a braking force from the second brake actuator. Advantageously, the two wheels are installed on opposite positions on the vehicle, e.g. on a left and a right side, respectively.

The vehicle, or the combination of the vehicle with a towing vehicle, may operate at any level of driving automation. In particular, the redundant control system may require an input from a driver, or it may be operated partially or entirely automatically.

The first and the second electronic control unit may be configured to receive and operate according to one or more external electric signals (e.g. from an automated or autonomous driving system). The first and the second electronic control unit may, individually or in common, be configured to communicate with further control units, as e.g. a driving control unit, a central control unit, or a superordinate braking control unit. The first and the second electronic control unit may be part of an electronic safety control system, such as an anti-lock braking system (ABS), an anti-slip regulation (ASR), a roll stability program (RSP), or more generally an electronic stability program (ESP).

The redundant control system may operate the first and the second brake actuator in general independently from each other. The braking system may be configured for side-wise, but also for axle wise control. More specifically, the braking system may be a multi-channel system, and in particular 2-channel braking system that can control the braking of a first wheel and of a second wheel independently from each other.

The first and/or the second delivery pressure may be configured to directly actuate the first and the second brake actuator, respectively. However, it may also be the case that the first and/or the second delivery pressure are merely adapted to pneumatically control a respective actuation pressure (brake pressure) of the first and the second brake actuator. The first and/or the second delivery pressure may thus operate the first and the second brake actuator in an indirect manner.

Advantageously, the first electronic control unit causes the first selector valve to select the first pressure as the second delivery pressure only if a malfunction in the second electronic control unit and/or the second valve assembly and/or a problem with the second pressure is present. Likewise, the second electronic control unit causes the second selector valve to select the second pressure as the first delivery pressure only if a malfunction in the first electronic control unit and/or the first valve assembly and/or a problem with the first pressure is present. The first selector valve and the second selector valve thus provides a safety or fallback measure in the task of providing the first delivery pressure and the second delivery pressure for the first brake unit and the second brake unit, respectively.

In particular, in the event of a failure in a first sub-system of the redundant control system (comprising the first electronic control unit and the first valve assembly), the second electronic control unit can take over control of the first delivery pressure, such that the redundant control system may control both the first and the second brake actuator as a one-channel braking system. Such a one-channel braking system may be understood as providing a brake pressure for both the first brake actuator and the second brake actuator simultaneously

Likewise, in the event of a failure in a second sub-system of the redundant control system (comprising the second electronic control unit and the second valve assembly), the first electronic control unit may switch to control both the first and the second brake actuator as a one-channel braking system.

In embodiments, the redundant control system may be installed within a single casing. The first electronic control unit and the first valve assembly may be physically grouped (e.g., arranged as a unit) with the second selector valve in the first sub-system. Likewise, the second electronic control unit and the second valve assembly may be physically grouped with the first selector valve in the second sub-system. The first and the second sub-system are pneumatically connected in particular via the first and the second selector valve. In addition, the first and the second sub-system may further share a connection to a pressure supply, and both connect to a same pressure exhaust.

In other embodiments, the components of the redundant control system are distributed over the vehicle, i.e. installed at several different locations of the vehicle.

The redundant control system may be comprised, for example, in an electronic braking system (EBS), or in an ABS.

Optionally, the first selector valve is configured to assume an activated state in order to select the first pressure, and a non-activated state in order to select the second pressure. In addition, or alternatively, the second selector valve is configured to assume an activated state in order to select the second pressure, and a non-activated state in order to select the first pressure.

The first selector valve and/or the second selector valve may in particular be carried out as a 3/2-way valve. They may be configured to connect an outlet for providing the first or second delivery pressure, respectively, with either an inlet for receiving the first pressure or an inlet for receiving the second pressure. The non-activated state may in particular be a fallback state, which is assumed if no control signal is received from the respective first or second electronic control unit, or if there is a power failure.

Accordingly, the activated state may only be assumed upon a particular signal from the respective electronic control unit. This implementation is advantageous for providing a safe operation of the redundant control system even in the case of a malfunction, and in particular if a power failure or error within the respective electronic control unit has occurred.

In embodiments, the first and/or the second electronic control unit may be configured to receive a signal from a superordinate system in order to operate the first and/or second selector valve, respectively. Advantageously, the first and/or second electronic control unit are configured to operate the first and/or second selector valve autonomously after a malfunction has occurred in the redundant control system or in the braking system.

Optionally the first electronic control unit is configured to detect a malfunction in the braking system, and to control the first selector valve to select the first pressure after detecting the malfunction. Alternatively, or in addition, the second electronic control unit is configured to detect a malfunction in the braking system, and to control the second selector valve to select the second pressure after detecting the malfunction. Upon detecting a respective malfunction, the first electronic control unit may be configured to decide autonomously if the first selector valve should select the first pressure as the second delivery pressure, and to control the first selector valve accordingly. Likewise, , upon detecting a respective malfunction, the second electronic control unit may be configured to decide autonomously if the second selector valve should select the second pressure as the first delivery pressure, and to control the second selector valve accordingly.

The malfunctions may e.g. comprise a power supply failure, a broken or disconnected cable, an interruption of a communication line or data exchange, a failure within the first or the second electronic control unit (e.g. due to a short circuit or due to some external cause, such as e.g. water ingress), a failure or irregularity in a sensor signal, a pressure leak, a clogging or disruption of a pressure line, or a valve failure such as e.g. a broken spring, an open circuit or short circuit in a coil of an electro-pneumatic valve, or a dust or water ingress. The detection may be based on various indicators. Indicators may comprise, in particular, a presence, absence, or particular value of a signal of one or more sensors. Indicators may comprise a signal, or absence thereof, from a system superordinate to the redundant control system, a power failure or power disruption, or a signal (or absence thereof) from the respective other electronic control unit.

Optionally the first electronic control unit and the second electronic control unit are configured to communicate with each other. The configuration may in particular include a data line or an optical data connection between the first electronic control unit and the second electronic control unit, which are adapted to transmit and receive data over this facility. The first electronic control unit and the second electronic control unit may be configured to exchange data regularly, like e.g. a heartbeat or some other piece of data according to some information exchange protocol. Furthermore, the first and the second electronic control unit may be configured to exchange data in particular if a malfunction has been detected.

Optionally, the first electronic control unit is configured to detect, as a malfunction, at least one of the following: a failure of a power supply to the second electronic control unit, a failure signal from the second electronic control unit, an absence of a signal from the second electronic control unit, and/or a disagreement between a value of the second pressure obtained from the second electronic control unit and a measured value of the second pressure. In addition, or alternatively, the second electronic control unit is configured to detect as a malfunction at least one of the following: a failure of a power supply to the first electronic control unit, a failure signal from the first electronic control unit, an absence of a signal from the first electronic control unit, and/or a disagreement between a value of the first pressure obtained from the first electronic control unit and a measured value of the first pressure. Thus, the first (second) electronic control unit may in particular be configured to detect a malfunction in the second (first) sub-system.

Optionally, the first electronic control unit is configured to generate a failure signal if it detects a failure or malfunction of at least one valve in the first valve assembly, and/or if it detects a fault or malfunction in sensor data of a sensor, wherein the sensor provides the sensor data to the first electronic control unit, and/or if it detects an internal failure, i.e. a malfunction within the first control unit itself. In addition, or alternatively, the second electronic control unit is configured to generate a failure signal if it detects a failure or malfunction of at least one valve in the second valve assembly, and/or if it detects a fault or malfunction in sensor data of a sensor, wherein the sensor provides the sensor data to the second electronic control unit, and/or if it detects an internal failure, i.e. a malfunction within the second control unit itself. Thus the first (second) electronic control unit may be configured to diagnose its own circuit, including itself, and relay information about a malfunction in its own circuit to the second (first) electronic control unit, which then can take over by deciding if the second (first) selector valve should be activated in order to provide the second (first) pressure as the first (second) delivery pressure.

Optionally, if the first brake actuator is configured to brake a particular wheel of the vehicle, the first electronic control unit is configured to receive wheel speed data from a first wheel speed sensor, and the second electronic control unit is configured to receive wheel speed data from a second wheel speed sensor, wherein the first wheel speed sensor and the second wheel speed sensor are both adapted to measure a wheel speed of the particular wheel. Alternatively, both the first and the second electronic control unit may be configured to receive wheel speed data from a single wheel speed sensor configured to measure a wheel speed of the particular wheel.

In addition, or alternatively, the second brake actuator is configured to brake a second wheel of the vehicle, and the second electronic control unit is configured to receive wheel speed data from a third wheel speed sensor, and the first electronic control unit is configured to receive wheel speed data from a fourth wheel speed sensor, wherein the third wheel speed sensor and the fourth wheel speed sensor are both adapted to measure a wheel speed of the second wheel. Alternatively, both the first and the second electronic control unit may be configured to receive wheel speed data from a single wheel speed sensor configured to measure a wheel speed of the second wheel.

Optionally the redundant control system comprises a control pressure port for providing a control pressure, and the first valve assembly and the second valve assembly each include a respective first valve. These two first valves are configured to provide the control pressure as the first pressure and as the second pressure, respectively. The redundant control system may be realized as a unit comprising only a single control pressure port for both the first and the second valve assembly.

By operating the first valve of the first valve assembly, the first electronic control unit may be configured to increase and reduce the first pressure. It may thereby operate the first brake actuator, unless the second selector valve is set to select the second pressure as the first delivery pressure. Likewise, by operating the first valve of the second valve assembly, the second electronic control unit may be configured to increase and reduce the second pressure. It may thereby operate the second brake actuator, unless the first selector valve is set to select the first pressure as the second delivery pressure.

The control pressure may be provided e.g. for a service brake actuation of the first and/or the second brake actuator. A value of the control pressure may thus depend on a service brake request of a superordinate system, or of a driver. The first and the second electronic control unit may be configured to perform an axle-wise braking process, or a side-wise braking process where the first brake actuator and the second brake actuator are actuated independently, but in a coordinated fashion (e.g., with an actuation of one brake actuator suitably delayed with respect to the other one).

The braking process may depend on a driving situation of the vehicle. The driving situation may be determined from data received by the first and the second electronic control unit from sensors (as e.g. wheel speed sensors and pressure sensors) or from a superordinate system (e.g. via a data bus), and include information about e.g. wheel speed, wheel angle, wheel slip, road surface or surrounding traffic. In particular, the braking process may be performed as (a part of) an anti-lock braking or rollover stability process.

Optionally the redundant control system comprises a supply pressure port for supplying a supply pressure, and the first valve assembly and the second valve assembly each include a second valve. These two second valves are configured to provide the supply pressure as the first pressure and as the second pressure, respectively. The supply pressure may serve in particular to implement a parking brake function. The first delivery pressure and the second delivery pressure may serve to pneumatically control a delivery of supply pressure to actuate the first brake actuator and the second brake actuator, respectively. The redundant control system may be realized as a unit comprising only a single supply pressure port for both the first and the second valve assembly.

By operating the second valve of the first valve assembly, the first electronic control unit may be configured to increase and reduce the first pressure. It may thereby operate the first brake actuator, unless the second selector valve is set to select the second pressure as the first delivery pressure. Likewise, by operating the second valve of the second valve assembly, the second electronic control unit may be configured to increase and reduce the second pressure. It may thereby operate the second brake actuator, unless the first selector valve is set to select the first pressure as the second delivery pressure.

Optionally the redundant control system comprises an exhaust port, and the first valve assembly and the second valve assembly each include a respective third valve configured to exhaust the first pressure and the second pressure, respectively, via the exhaust port. The same exhaust port may also exhaust pressure from the first brake actuator and from the second brake actuator. The redundant control system may be realized as a unit comprising only a single exhaust port.

By operating the third valve of the first valve assembly, the first electronic control unit may be configured to reduce and increase the first pressure. It may thereby operate the first brake actuator, unless the second selector valve is set to select the second pressure as the first delivery pressure. Likewise, by operating the third valve of the second valve assembly, the second electronic control unit may be configured to reduce and increase the second pressure. It may thereby operate the second brake actuator, unless the first selector valve is set to select the first pressure as the second delivery pressure.

Optionally the vehicle comprises a first relay valve configured to provide a pressure at the first brake actuator, and the vehicle comprises a second relay valve configured to provide a pressure at the second brake actuator, and the first delivery pressure provides, by a control of the first relay valve, a pressure at the first brake actuator, and the second delivery pressure provides, by a control of the second relay valve, a pressure at the second brake actuator.

Optionally the first valve assembly and the second valve assembly each include a check valve. The check valves may be configured to admit an airflow only in a direction from a delivery pressure line to a supply or control pressure line. They may in particular provide a backup functionality. The check valves may be part of an anti-lock braking system, and they may be configured to relieve, directly (i.e., only via the first and/or the second selector valves) or indirectly (e.g. via a control of a relay valve), pressure from the first and the second brake actuator.

Optionally the redundant control system comprises at least one of the following:
- a first control pressure sensor for providing a control pressure value to the first electronic control unit,
- a second control pressure sensor for providing the control pressure value to the second electronic control unit,
- a first supply pressure sensor for providing a supply pressure value to the first electronic control unit,
- a second supply pressure sensor for providing the supply pressure value to the second electronic control unit,
- a first brake pressure sensor for providing a pressure value at the first brake actuator to the first electronic control unit,
- a second brake pressure sensor for providing a pressure value at the second brake actuator to the second electronic control unit,
- a third brake pressure sensor for providing a pressure value at the first brake actuator to the second electronic control unit,
- a fourth brake pressure sensor for providing a pressure value at the second brake actuator to the first electronic control unit.

The pressure sensors may be understood as pressure transducers, configured to transmit electric signals indicating the pressure to the first and/or second electronic control unit, respectively. The pressure sensors are advantageous for implementing the redundancy, safety and fallback functionalities described above. If only the first and the second, but not the third and the fourth brake pressure sensors are present, the first and the second brake pressure sensor are advantageously each connected both to the first and to the second electronic control unit.

In embodiments, the system may be manufactured without one or more of the sensors (for pressure and wheel speed) listed above, but with the first and second electronic control unit configured to receive data from such sensors. Once installed in a braking system, the first and the second electronic control unit may then automatically operate according to the sensors being present or absent in the braking system.

Embodiments further relate to a braking system for a commercial vehicle, comprising a first brake actuator, a second brake actuator, and a redundant control system as described above. The commercial vehicle may comprise a tractor or towing vehicle, and a trailer or towed vehicle. The redundant control system may in particular be implemented for wheels of the trailer or towed vehicle. The braking system may in particular be an EBS, or an ABS.

Embodiments further relate to a method for redundantly controlling a first delivery pressure for a first brake actuator and a second delivery pressure for a second brake actuator of a vehicle. The vehicle comprises a first electronic control unit, a first valve assembly controlled by the first electronic control unit and configured to provide a first pressure, a second electronic control unit, and a second valve assembly, controlled by the second electronic control unit and configured to provide a second pressure. The method comprises providing, by means of the first valve assembly and controlled by the first electronic control unit, the first pressure, and providing, by means of the second valve assembly and controlled by the second electronic control unit, the second pressure. The method further comprises selecting, controlled by the first electronic control unit, the first pressure or the second pressure as the second delivery pressure, and selecting, controlled by the second electronic control unit, the first pressure or the second pressure as the first delivery pressure. The selection of the second pressure as the first delivery pressure, and of the first pressure as the second delivery pressure, is advantageously carried out as a safety or fallback measure after detecting a malfunction.

The steps of this method may be individually repeated, and performed in a different order than just described. In particular, the first and/or second electronic control unit may repeatedly perform a check in order to determine if a malfunction is present, and if the first pressure or the second pressure should be provided as the first and/or the second delivery pressure. Based on an outcome of such a check, the first and/or the second electronic control unit may provide either the first or the second pressure as the first and/or the second delivery pressure, respectively.

The method may also be implemented in software or a computer program product. Embodiments of the present invention may comprise in particular a software or software module in an electronic control unit also adapted for other tasks. Therefore, embodiments also relate to a data storage device which holds a program code for performing the method when the program code is executed on a processor.

Some examples of the system and the method will be described in the following by way of examples only, and with respect to the accompanying figures, in which:
- Fig. 1: illustrates an embodiment of a redundant control system according to the present invention;
- Fig. 2: depicts further details of an embodiment of the redundant control system;
- Fig. 3: depicts further details of another embodiment of the redundant control system;
- Fig. 4: shows steps of a method for redundantly controlling a first delivery pressure for a first brake actuator and a second delivery pressure for a second brake actuator of a vehicle;
- Fig. 5: depicts a conventional control system for a two-channel electro-pneumatic braking system;
- Fig. 6: depicts a conventional control system for an anti-lock braking system.

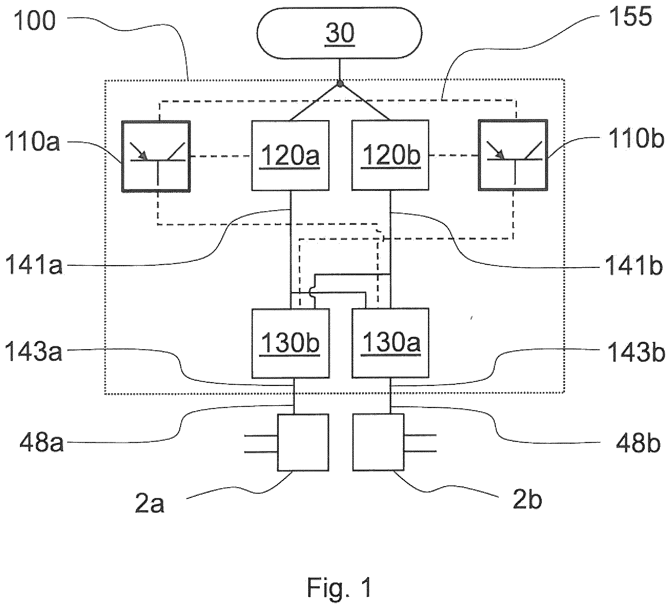

**Fig. 1** illustrates a redundant control system 100 for a braking system of a vehicle, according to the present invention. The braking system comprises a first brake actuator 2a and a second brake actuator 2b, which may be actuated pneumatically. The redundant control system 100 provides a first delivery pressure 143a for the first brake actuator 2a, and a second delivery pressure 143b for the second brake actuator 2b. The first delivery pressure 143a and the second delivery pressure 143b may be configured to actuate the first brake actuator 2a and the second brake actuator 2b, respectively, or they may be configured to merely control a pressure for actuating the first brake actuator 2a and the second brake actuator 2b.

The redundant control system 100 further comprises a first valve assembly 120a and a second valve assembly 120b, which are configured to provide the pressure from a pressure supply 30 both as the first delivery pressure 143a for the first brake actuator 2a, and as the second delivery pressure 143b to the second brake actuator 2b. For operating the first valve assembly 120a and the second valve assembly 120b, the redundant control system 100 comprises a first electronic control unit 110a and a second electronic control unit 110b, wherein the first electronic control unit 110a controls the first valve assembly 120a, and the second electronic control unit 110b controls the second valve assembly 120b.

Furthermore, the redundant control system 100 comprises a first selector valve 130a, which is positioned on a pressure line between the second valve assembly 120b and the second brake unit 10b. The first selector valve 130a is configured to receive the second pressure 141b. The first selector valve 130a is operated by the first electronic control unit 110a, and it may assume two states. In a first state, the first selector valve 130a does not interfere with the pressure line between the second valve assembly 120b and the second brake unit 2b. This state is assumed in an ordinary situation, in which in particular the second electronic control unit 110b and the second valve assembly 120b are operating without fault.

The first selector valve 130a is also attached to a pressure line carrying the first pressure 141a from the first valve assembly 120a. In a second state, the first selector valve 130a disconnects the second brake actuator 2b from the second valve assembly 120b, and connects the second brake actuator 2b to the first valve assembly 120a.

Advantageously, the second state is assumed whenever there is a malfunction in the part of the braking system that provides the second pressure 141b for the second brake actuator 2b in an ordinary situation. In order to provide redundancy and act as a fallback measure, the first selector valve 130a is controlled not by the second electronic control unit 110b, but by the first electronic control unit 110a.

In an analogous arrangement, the redundant control system 100 comprises a second selector valve 130b, which is positioned on a pressure line between the first valve assembly 120a and the first brake actuator 2a. The second selector valve 130b is operated by the second electronic control unit 110b, and it may again assume two states. In a first state, assumed in an ordinary situation in which in particular the first electronic control unit 110a and the first valve assembly 120a are operating without fault, the second selector valve 130b passes the first pressure 141a as the first delivery pressure 143a to the first brake actuator 2a. In a second state, the second selector valve 130b disconnects the first brake actuator 2a from the first valve assembly 120a, and connects the first brake actuator 2a to the second valve assembly 120b. Again, the second state may be assumed whenever there is a malfunction in the part of the braking system that provides the first pressure 141a to the first brake actuator 2a in an ordinary situation. In particular, the second selector valve 130b is controlled not by the first electronic control unit 110a, but by the second electronic control unit 110b.

Advantageously, the first selector valve 130a and the second selector valve 130b are each implemented as a 3/2-way valve, wherein the first state is a non-activated (or fallback) state, and the second state is an activated state (whose maintenance requires power).

The first electronic control unit 110a and the second electronic control unit 110b are configured to communicate with each other, and in particular to exchange data via a bidirectional data communication line 155. In embodiments, the first electronic control unit 110a and the second electronic control unit 110b are configured to monitor a power supply in the respective other electronic control unit 110b, 110a, a failure signal or a presence or absence of a signal from the respective other control unit 110b, 110a or from the second valve assembly 120b and the first valve assembly 120a, respectively. They may monitor a pressure value obtained by a pressure sensor, or a wheel speed obtained by a wheel speed sensor.

The first electronic control unit 110a and the second electronic control unit 110b may in particular be configured to detect, as a malfunction, a power supply failure. Such a failure could be caused by a broken wire or disconnected cable of the brake control system (not considering e.g. brake lamp supply). They may further be configured to detect a malfunction in the respective other electronic control unit 110b, 110a. Such a malfunction could e.g. be caused by a short circuit, or by some external source (e.g. water ingress). The first electronic control unit 110a and the second electronic control unit 110b may further be configured to detect, as a malfunction, a failure of a sensor signal, which may be caused by a failure of a corresponding sensor (e.g. a pressure sensor or a wheel speed sensor), but also by a malfunction in the first electronic control unit 110a or in the second electronic control unit 110b. They may furthermore be configured to detect, as a malfunction, a failure of an electro-pneumatic valve. Advantageously, the first electronic control unit 110a is configured to detect a failure in the second valve assembly 120b, and the second electronic control unit 110b is configured to detect a failure in the first valve assembly 120a. Such a failure may be caused by an internal failure of a valve, as e.g. by a broken spring, an open circuit or a short circuit of a coil, or by a dust or water ingress. However, it may also be caused by a malfunction in the first electronic control unit 110a or in the second electronic control unit 110b.

The redundant control system 100 may be comprised as a unit, or as a single mechatronic block, within a single casing. However, it may also be distributed over the vehicle (or vehicle combination), and thus be implemented as a part of a distributed brake control system. In particular, a first sub-system comprising the first electronic control unit 110a and the first valve assembly 120a may be located or encased separately from a second sub-system comprising the second electronic control unit 110b and the second valve assembly 120b. In such an arrangement, the first selector valve 130a may be installed in proximity or together with the second sub-system, and the second selector valve 130b may be installed in proximity or together with the first sub-system.

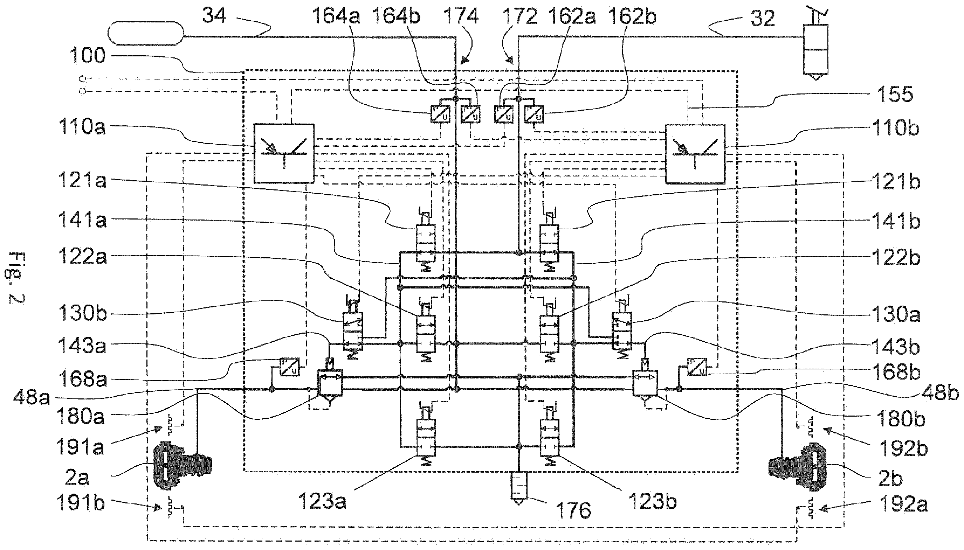

**Fig. 2** depicts an embodiment of the redundant control system 100 in a braking system similar to the system depicted in Fig 5. The first valve assembly 120a comprises a first valve 121a for providing a control pressure 32 as the first pressure 141a, a second valve 122a for providing a supply pressure 34 as the first pressure 141a, and a third valve 123a to exhaust the first pressure 141a through a common exhaust port 176. Likewise, the second valve assembly 120b comprises a first valve 121b for delivering the control pressure 32 as the second pressure 141b, a second valve 122b for providing the supply pressure 34 as the second pressure 141b, and a third valve 123b to exhaust the second pressure 141b through the common exhaust port 176.

The redundant control system 100 includes a first selector valve 130a, carried out as a 3/2-way valve, to select either the first pressure 141a or the second pressure 141b as the second delivery pressure 143b. The redundant control system 100 further includes a second selector valve 130b, also carried out as a 3/2-way valve, to select either the first pressure 141a or the second pressure 141b as the first delivery pressure 143a.

The redundant control system 100 provides a one-channel redundancy option to the two-channel electro-pneumatic braking system. The first and the second valve assembly 120a, 120b each correspond to one channel. With their respective three electro-pneumatic valves 121a, 121b, 122a, 122b, 123a, 123b, they control the delivery pressure 143a, 143b to the brake actuators 2a, 2b. In this embodiment, the first and the second delivery pressure 143a, 143b operate a first relay valve 180a and a second relay valve 180b, respectively. The first and the second electro-pneumatic selector valves 130a, 130b are configured to select either the first or the second valve assembly 120a, 120b in order to provide the delivery pressure 143a, 143b.

The redundant control system 100 may include a first and a second control pressure sensor 162a, 162b (or pressure transducer) for measuring the control pressure 32, a first and a second supply pressure sensor 164a, 164b for measuring the supply pressure, and a first and a second brake pressure sensor 168a, 168b for measuring the first and the second brake pressure 48a, 48b, respectively, wherein each first pressure sensor 162a, 164a, 168a provides data to the first electronic control unit 110a, and each second pressure sensor 162b, 164b, 168b provides data to the second electronic control unit 110b.

In further embodiments, a number of some or all of the aforementioned pressure sensors 162a, 162b, 164a, 164b, 168a, 168b may however not be doubled (with respect to the embodiment shown in Fig. 5). Rather, at each position a single pressure sensor may be connected to both the first and the second electronic control unit 110a, 110b. Depending on the application, in particular a duplication of the control pressure sensors 162a, 162b is optional. In particular, for autonomous driving an electrical communication including electrical brake control demand might be present, and a single control pressure sensor (either the first 162a, or the second 162b) may already provide a sufficient redundancy level. In general, however, the described doubling of sensors increases performance of the redundant control system 100 in redundancy mode.

Likewise, in order to increase a level of redundancy, the number of wheel speed sensors may be duplicated, compared to the embodiment shown in Fig. 5. In the present embodiment, for each wheel a first wheel speed sensor 191a, 192a is connected to the first electronic control unit 110a, and a second wheel speed sensor 191b, 192b is connected to the second electronic control unit 110b. Again, the duplication of the wheel speed sensors is optional. It is also possible to connect a single sensor per wheel to both the first and the second electronic control unit 110a, 110b, thus installing only one sensor on each side. In this case, it may be advantageous to connect each wheel speed sensor to both the first and the second electronic control unit 110a, 110b.

The first and the second electronic control unit 110a, 110b are configured to communicate with other control unit(s), and to process the incoming signals. They are further configured to receive and process the signals from the pressure transducers 162a, 162b, 164a, 164b, 168a, 168b, from a first and a second wheel speed sensor 191a, 191b at a first wheel, from a first and a second wheel speed sensor 192a, 192b at a second wheel, and from other internal or external sensors. The first and second electronic control unit 110a, 110b are further configured to control the electro-pneumatic valves based on the received and processed signals. Furthermore, there is a bidirectional communication line 155 between the first electronic control unit 110a and the second electronic control unit 110b, by which they may exchange information about a detected malfunction, and/or monitor each other (or data processed in each other) in order to detect the malfunction.

Thus, in a normal operation mode, the brake functionality is performed by the redundant control system 100 in a two-channel manner, wherein the first valve assembly 120a controls the first delivery pressure 143a, and the second valve assembly 120b controls the second delivery pressure 143b. The first and second electronic control units 110a, 110b work in a shared control mode. In this shared control mode, the first and the second electronic control unit 110a, 110b may be configured to communicate with each other, and also to focus on performance monitoring of any component of the redundant control system 100, or of the braking system.

However, both the first electronic control unit 110a and the second electronic control unit 110b can control the full system independently. In the event of a failure or malfunction in the first sub-system (comprising, in particular, the first electronic control unit 110a, the first valve assembly 120a, the first control pressure sensor 162a, and the first supply pressure sensor 164a), the second sub-system (comprising in particular the second electronic control unit 110b, the second valve assembly 120b, the second control pressure sensor 162b, and the second supply pressure sensor 164b), which remains intact, can take over control of the first delivery pressure 143a by activating the second selector valve 130b. This results in a single-channel control mode.

Likewise, in the event of a failure in the second sub-system, the intact first sub-system can take over control of the second delivery pressure 143b by activating the first selector valve 130a, again resulting in a single-channel control mode.

With this, malfunctions as outlined above can be handled gracefully, as the vehicle retains a full gradable brake and stability functionality.

However, in case of a failure in a signal of one of the control pressure transducers 162a, 162b, of one of the supply pressure transducers 164a, 164b, or of one of the wheel speed sensors 191a, 191b, 192a, 192b, it is not necessary to switch to such a fallback mode by activating the first or the second selector valve 130a, 130b in the embodiment depicted in this figure. This is so because the first and the second electronic control unit 110a, 110b are able to exchange the sensor information on the bidirectional communication line 155. After detecting the malfunction, the first electronic control unit 110a may be configured to request sensor data from the second electronic control unit 110b, and vice versa.

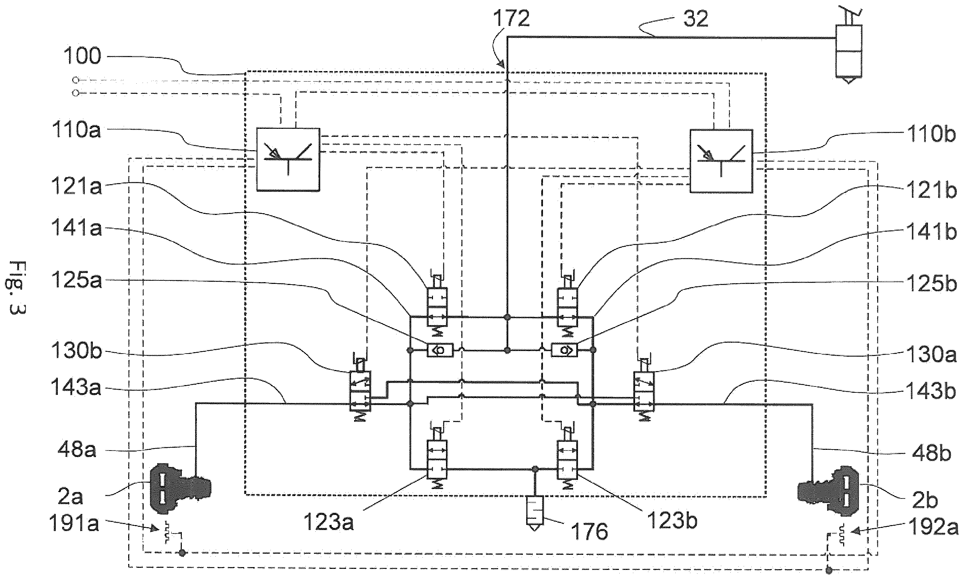

**Fig. 3** depicts further details of another embodiment of the redundant control system 100. The embodiment is installed in a braking system similar to that of Fig. 6. In this embodiment, only a control pressure port 172 is present, and the first valve assembly 120a and the second valve assembly 120b provide the first and second delivery pressure 143a, 143b as brake pressures 48a, 48b for the first and the second brake actuator 2a, 2b, respectively.

The first valve assembly 120a and the second valve assembly 120b each include a check valve 125a, 125b. The check valves 125a, 125b are configured to admit an airflow only from lines carrying the first and second delivery pressure 143a, 143b, respectively. In this embodiment, the redundant control system 100 may in particular be configured to provide a two-channel ABS functionality in normal operation. Furthermore, in this embodiment the wheel speed sensors 191a, 192a are not duplicated, but each connected to both the first and the second electronic control unit 110a, 110b. By means of the first and the second selector valves 130a, 130b, the first and the second electronic control unit 110a, 110b are configured to take over full control in the event of a malfunction, resulting in an operation as a one-channel braking system. The operation of the redundancy may be basically analogous to the one described before.

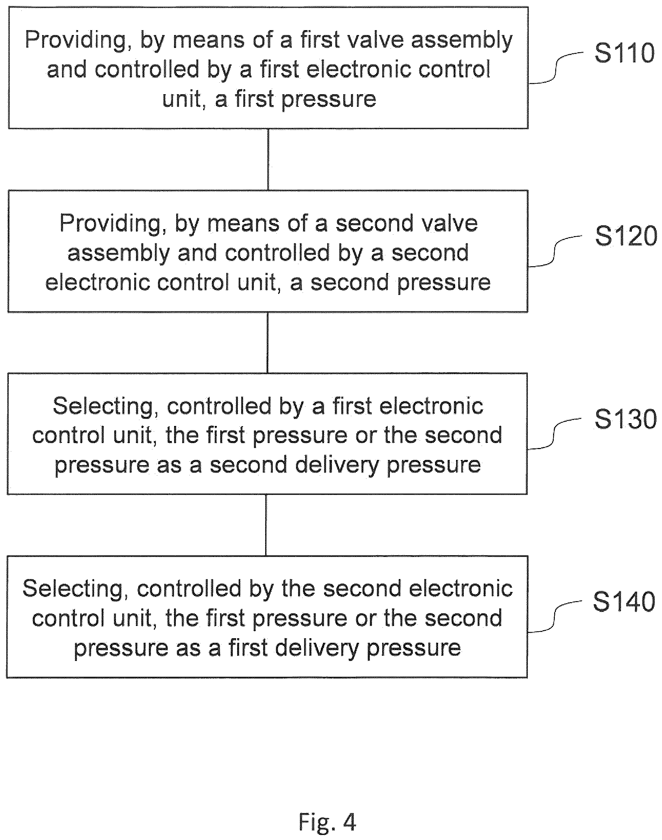

**Fig. 4** shows steps of a method for redundantly controlling a first delivery pressure 143a for a first brake actuator 2a, and a second delivery pressure 143b for a second brake actuator 2b of a vehicle. The vehicle comprises a redundant control system 100 with a first electronic control unit 110a, a first valve assembly 120a which is controlled by the first electronic control unit 110a and configured to provide a first pressure 141a, a second electronic control unit 110b, and a second valve assembly 120b which is controlled by the second electronic control unit 110b and configured to provide a second pressure 141b.

The method comprises providing S110, by means of the first valve assembly 120a and controlled by the first electronic control unit 110a, the first pressure 141a. The method further comprises providing S120, by means of the second valve assembly 120b and controlled by the second electronic control unit 110b, the second pressure 141b. The method then comprises selecting S130, controlled by the first electronic control unit 110a, the first pressure 141a or the second pressure 141b as the second delivery pressure 143b. Selecting the first pressure 141a for the second delivery pressure 143b is advantageously based on detecting, by means of the first electronic control unit 110a, an error in a second sub-system comprising the second electronic control unit 110b and the second valve assembly 120b. The method further comprises selecting S140, controlled by the second electronic control unit 110b, the first pressure 141a or the second pressure 141b as the first delivery pressure 143a. Again, selecting the second pressure 141b for the first delivery pressure 143a is advantageously based on detecting, by means of the second electronic control unit 110b, an error in a first sub-system comprising the first electronic control 110a unit and the first valve assembly 120a.

This method may also be a computer-implemented method. A person of skill in the art would readily recognize that steps of various above-described methods may be performed by programmed computers. Embodiments are therefore also intended to cover program storage devices, e.g., digital data storage media, which are machine or computer readable and encode machine-executable or computer-executable programs of instructions, wherein the instructions perform some or all of the acts of the above-described methods, when executed on the computer or processor.

The description and drawings merely illustrate the principles of the invention. It will thus be appreciated that those skilled in the art will be able to devise various arrangements that, although not explicitly described or shown herein, embody the principles of the invention and are included within its scope as defined by the appended claims.

### LIST OF REFERENCE SIGNS

- 1: conventional control system
- 2a, 2b: first, second brake actuator
- 10: electronic control unit
- 20a, 20b: first, second valve assembly
- 21a, 21b: first valves
- 22a, 22b: second valves
- 23a, 23b: third valves
- 25a, 25b: check valves
- 30: pressure supply
- 32: control pressure
- 34: supply pressure
- 43a, 43b: first, second delivery pressure
- 48a, 48b: first, second brake pressure
- 62: control pressure sensor
- 64: supply pressure sensor
- 68a, 68b: first, second brake pressure sensor
- 72: control pressure port
- 74: supply pressure port
- 76: exhaust port
- 80a, 80b: first, second relay valve
- 91: wheel speed sensor at a first wheel
- 92: wheel speed sensor at a second wheel
- 100: redundant control system
- 110a, 110b: first, second electronic control unit
- 120a, 120b: first, second valve assembly
- 121a, 121b: first valves
- 122a, 122b: second valves
- 123a, 123b: third valves
- 125a, 125b: check valves
- 130a, 130b: first, second selector valve
- 141a, 141b: first, second pressure
- 143a, 143b: first, second delivery pressure
- 155: bidirectional data communication line
- 162a, 162b: first, second control pressure sensor
- 164a, 164b: first, second supply pressure sensor
- 168a, 168b: first, second brake pressure sensor
- 172: control pressure port
- 174: supply pressure port
- 176: exhaust port
- 180a, 180b: first, second relay valve
- 191a, 191b: first, second wheel speed sensor at first wheel
- 192a, 192b: first, second wheel speed sensor at second wheel
- S110, S120, S130, S140: steps of a method

## Claims

1. A redundant control system (100) for controlling a first delivery pressure (143a) for a first brake actuator (2a) and a second delivery pressure (143b) for a second brake actuator (2b) of a vehicle, the redundant control system (100) comprising:
a first electronic control unit (110a);
a first valve assembly (120a), controlled by the first electronic control unit (110a) and configured to provide a first pressure (141a);
a second electronic control unit (110b);
a second valve assembly (120b), controlled by the second electronic control unit (110b) and configured to provide a second pressure (141b);
whereby the redundant control system further comprises:
a first selector valve (130a), controlled by the first electronic control unit (110a), configured to provide the second delivery pressure (143b) by selecting either the first pressure (141a) or the second pressure (141b); and
a second selector valve (130b), controlled by the second electronic control unit (110b), configured to provide the first delivery pressure (143a) by selecting either the first pressure (141a) or the second pressure (141b).

2. The redundant control system (100) according to claim 1,
**characterized in that:**
- the first selector valve (130a) is configured to assume an activated state in order to select the first pressure (141a), and a non-activated state in order to select the second pressure (141b), and/or
- the second selector valve (130b) is configured to assume an activated state in order to select the second pressure (141b), and a non-activated state in order to select the first pressure (141a).

3. The redundant control system (100) according to one of the preceding claims, **characterized in that**
the first electronic control unit (110a) is configured to detect a malfunction in the redundant control system (100) and to control the first selector valve (130a) to select the first pressure (141a) after detecting the malfunction, and the second electronic control unit (110b) is configured to detect a malfunction in the redundant control system (100) and to control the second selector valve (130b) to select the second pressure (141b) after detecting the malfunction.

4. The redundant control system (100) according to one of the preceding claims, **characterized in that**
the first electronic control unit (110a) and the second electronic control unit (110b) are configured to communicate with each other.

5. The redundant control system (100) according to one of the preceding claims, **characterized in that**
the first electronic control unit (110a) is configured to detect as a malfunction at least one of the following:
- a failure of a power supply of the second electronic control unit (110b),
- a failure signal from the second electronic control unit (110b),
- an absence of a signal from the second electronic control unit (110b),
- a disagreement between a value of the second pressure (141b) obtained from the second electronic control unit (110b) and a measured value of the second pressure (141b),
and wherein the second electronic control unit (110b) is configured in a corresponding manner.

6. The redundant control system according to one of the preceding claims, **characterized in that**
the first electronic control unit (110a) is configured to generate a failure signal in at least one of the following cases:
- a failure of at least one valve (121a, 122a, 123a, 125a) in the first valve assembly (120a),
- a fault in sensor data of a sensor, wherein the sensor provides the sensor data to the first electronic control unit (110a),
- an internal failure in the first control unit (110a),
wherein the second electronic control unit (110b) is configured in a corresponding manner.

7. The redundant control system (100) according to one of the preceding claims, wherein the first brake actuator (2a) is configured to brake a first wheel of the vehicle and the second brake actuator (2b) is configured to brake a second wheel of the vehicle, the redundant control system (100)
**characterized in that**
- the first electronic control unit (110a) is configured to receive wheel speed data from a first wheel speed sensor (191a), and the second electronic control unit (110b) is configured to receive wheel speed data from a second wheel speed sensor (191b), wherein the first wheel speed sensor (191a) and the second wheel speed sensor (191b) are both adapted to measure a wheel speed of the first wheel, or
- the first electronic control unit (110a) and the second electronic control unit (110b) are configured to both receive wheel speed data from a same wheel speed sensor (191a), adapted to measure a wheel speed of the wheel,
and wherein an analogous configuration is set up for the second wheel.

8. The redundant control system (100) according to one of the preceding claims, further comprising a control pressure port (172) for providing a control pressure (32), **characterized in that**
the first valve assembly (120a) and the second valve assembly (120b) each include a respective first valve (121a, 121b) configured to provide the control pressure (32) as the first pressure (141a) and as the second pressure (141b), respectively.

9. The redundant control system (100) according to one of the preceding claims, further comprising a supply pressure port (174) for supplying a supply pressure (34), **characterized in that**
the first valve assembly (120a) and the second valve assembly (120b) each include a respective second valve (122a, 122b) configured to provide the supply pressure (34) as the first pressure (141a) and as the second pressure (141b), respectively.

10. The redundant control system (100) according to one of the preceding claims, further comprising an exhaust port (176),
**characterized in that**
the first valve assembly (120a) and the second valve assembly (120b) each include a respective third valve (123a, 123b) configured to exhaust the first pressure (141a) and the second pressure (141b), respectively, via the exhaust port (176).

11. The redundant control system (100) according to one of the preceding claims, wherein the vehicle comprises a first relay valve (180a) configured to provide a first brake pressure (48a) to the first brake actuator (2a), and a second relay valve (180b) configured to provide a second brake pressure (48b) to the second brake actuator (2b), **characterized in that**
the first delivery pressure (143a) is configured to control the first relay valve (180a) in providing a the first brake pressure (48a) to the first brake actuator (2a), and the second delivery pressure (143b) is configured to control the second relay valve (180b) in providing the second brake pressure (48b) to the second brake actuator (2b).

12. The redundant control system (100) according to claim 8,
**characterized in that**
the first valve assembly (120a) and the second valve assembly (120b) each include a check valve (125a, 125b).

13. The redundant control system (100) according to one of the claims 8 to 12, **characterized in that**
the redundant control system 100 comprises at least one of the following:
- a first control pressure sensor (162a) for providing a control pressure value to the first electronic control unit (110a);
- a second control pressure sensor (162b) for providing the control pressure value to the second electronic control unit (110b);
- a first supply pressure sensor (164a) for providing a supply pressure value to the first electronic control unit (110a);
- a second brake supply pressure sensor (164b) for providing the supply pressure value to the second electronic control unit (110b);
- a first brake pressure sensor (168a) for providing a pressure value at the first brake actuator (2a) to the first electronic control unit (110a);
- a second brake pressure sensor (168b) for providing a pressure value at the second brake actuator (2b) to the second electronic control unit (110b).

14. A braking system for a commercial vehicle, comprising a first brake actuator (2a) and a second brake actuator (2b),
**characterized by**
a redundant control system (100) as claimed in one of the claims 1 to 13.

15. A method for redundantly controlling a first delivery pressure (143a) for a first brake actuator (2a) and a second delivery pressure (143b) for a second brake actuator (2b) of a vehicle, wherein the vehicle comprises a first electronic control unit (110a), a first valve assembly (120a), controlled by the first electronic control unit (110a) and configured to provide a first pressure (141a), a second electronic control unit (110b), and a second valve assembly (120b), controlled by the second electronic control unit (110b) and configured to provide a second pressure (141b), the method comprising:
Providing (S110), by means of the first valve assembly (120a) and controlled by the first electronic control unit (110a), the first pressure (141a);
Providing (S120), by means of the second valve assembly (120b) and controlled by the second electronic control unit (110b), the second pressure (141b);
**characterized by**
Selecting (S130), controlled by the first electronic control unit (110a), the first pressure (141a) or the second pressure (141b) as the second delivery pressure (143b); and
Selecting (S140), controlled by the second electronic control unit (110b), the first pressure (141a) or the second pressure (141b) as the first delivery pressure (143a).

## Patentansprüche

1. Redundantes Steuersystem (100) zum Steuern eines ersten Förderdrucks (143a) für einen ersten Bremsaktuator (2a) und eines zweiten Förderdrucks (143b) für einen zweiten Bremsaktuator (2b) eines Fahrzeugs, wobei das redundante Steuersystem (100) Folgendes umfasst:
eine erste elektronische Steuereinheit (110a);
eine erste Ventilanordnung (120a), die von der ersten elektronischen Steuereinheit (110a) gesteuert wird und dazu konfiguriert ist, einen ersten Druck (141a) bereitzustellen;
eine zweite elektronische Steuereinheit (110b);
eine zweite Ventilanordnung (120b), die von der zweiten elektronischen Steuereinheit (110b) gesteuert wird und dazu konfiguriert ist, einen zweiten Druck (141b) bereitzustellen;
wobei das redundante Steuersystem weiter Folgendes umfasst:
ein erstes Wahlventil (130a), das von der ersten elektronischen Steuereinheit (110a) gesteuert wird und dazu konfiguriert ist, den zweiten Förderdruck (143b) bereitzustellen, indem es entweder den ersten Druck (141a) oder den zweiten Druck (141b) auswählt;
ein zweites Wahlventil (130b), das von der zweiten elektronischen Steuereinheit (110b) gesteuert wird und dazu konfiguriert ist, den ersten Förderdruck (143a) bereitzustellen, indem es entweder den ersten Druck (141a) oder den zweiten Druck (141b) auswählt.

2. Redundantes Steuersystem (100) nach Anspruch 1,
**dadurch gekennzeichnet, dass:**
- das erste Wahlventil (130a) dazu konfiguriert ist, einen aktivierten Zustand einzunehmen, um den ersten Druck (141a) auszuwählen, und einen nicht aktivierten Zustand, um den zweiten Druck (141b) auszuwählen, und/oder
- das zweite Wahlventil (130b) dazu konfiguriert ist, einen aktivierten Zustand einzunehmen, um den zweiten Druck (141b) auszuwählen, und einen nicht aktivierten Zustand, um den ersten Druck (141a) auszuwählen.

3. Redundantes Steuersystem (100) nach einem der vorstehenden Ansprüche,
**dadurch gekennzeichnet, dass**
die erste elektronische Steuereinheit (110a) dazu konfiguriert ist, eine Fehlfunktion in dem redundanten Steuersystem (100) zu erfassen und das erste Wahlventil (130a) zu steuern, um nach Erfassen der Fehlfunktion den ersten Druck (141a) auszuwählen, und die zweite elektronische Steuereinheit (110b) dazu konfiguriert ist, eine Fehlfunktion in dem redundanten Steuersystem (100) zu erfassen und das zweite Wahlventil (130b) zu steuern, um nach Erfassen der Fehlfunktion den zweiten Druck (141b) auszuwählen.

4. Redundantes Steuersystem (100) nach einem der vorstehenden Ansprüche,
**dadurch gekennzeichnet, dass**
die erste elektronische Steuereinheit (110a) und die zweite elektronische Steuereinheit (110b) dazu konfiguriert sind, miteinander zu kommunizieren.

5. Redundantes Steuersystem (100) nach einem der vorstehenden Ansprüche,
**dadurch gekennzeichnet, dass**
die erste elektronische Steuereinheit (110a) dazu konfiguriert ist, als eine Fehlfunktion mindestens eines der Folgenden zu erfassen:
- einen Ausfall einer Stromversorgung der zweiten elektronischen Steuereinheit (110b),
- ein Ausfallsignal von der zweiten elektronischen Steuereinheit (110b),
- ein Ausbleiben eines Signals von der zweiten elektronischen Steuereinheit (110b),
- eine Nichtübereinstimmung zwischen einem Wert des zweiten Drucks (141b), der von der zweiten elektronischen Steuereinheit (110b) erhalten wird, und einem gemessenen Wert des zweiten Drucks (141b),
und wobei die zweite elektronische Steuereinheit (110b) entsprechend konfiguriert ist.

6. Redundante Steuervorrichtung nach einem der vorstehenden Ansprüche,
**dadurch gekennzeichnet, dass**
die erste elektronische Steuereinheit (110a) dazu konfiguriert, mindestens ein Ausfallsignal in mindestens einem der folgenden Fälle zu erzeugen:
- einem Ausfall mindestens eines Ventils (121a, 122a, 123a, 125a) in der ersten Ventilanordnung (120a),
- einem Fehler in Sensordaten eines Sensors, wobei der Sensor die Sensordaten an die erste elektronische Steuereinheit (110a) bereitstellt,
- einem internen Ausfall in der ersten Steuereinheit (110a),
wobei die zweite elektronische Steuereinheit (110b) entsprechend konfiguriert ist.

7. Redundantes Steuersystem (100) nach einem der vorstehenden Ansprüche, wobei der erste Bremsaktuator (2a) dazu konfiguriert ist, ein erstes Rad des Fahrzeugs zu bremsen, und der zweite Bremsaktuator (2b) dazu konfiguriert ist, ein zweites Rad des Fahrzeugs zu bremsen, wobei das redundante Steuersystem (100)
**dadurch gekennzeichnet, dass**
- die erste elektronische Steuereinheit (110a) dazu konfiguriert ist, Raddrehzahldaten von einem ersten Raddrehzahlsensor (191a) zu empfangen, und die zweite elektronische Steuereinheit (110b) dazu konfiguriert ist, Raddrehzahldaten von einem zweiten Raddrehzahlsensor (191b) zu empfangen, wobei der erste Raddrehzahlsensor (191a) und der zweite Raddrehzahlsensor (191b) beide dazu angepasst sind, eine Raddrehzahl des ersten Rades zu messen, oder
- die erste elektronische Steuereinheit (110a) und die zweite elektronische Steuereinheit (110b) dazu konfiguriert sind, beide Raddrehzahldaten von demselben Raddrehzahlsensor (191a) zu empfangen, der dazu angepasst ist, eine Raddrehzahl des Rades zu messen, und wobei eine analoge Konfiguration für das zweite Rad eingerichtet ist.

8. Redundantes Steuersystem (100) nach einem der vorstehenden Ansprüche, das weiter eine Steuerdrucköffnung (172) zum Bereitstellen eines Steuerdrucks (32) umfasst,
**dadurch gekennzeichnet, dass**
die erste Ventilanordnung (120a) und die zweite Ventilanordnung (120b) jeweils ein jeweiliges erstes Ventil (121a, 121b) beinhalten, das dazu konfiguriert ist, den Steuerdruck (32) als den ersten Druck (141a) bzw. als den zweiten Druck (141b) bereitzustellen.

9. Redundantes Steuersystem (100) nach einem der vorstehenden Ansprüche, das weiter eine Versorgungsdrucköffnung (174) zum Bereitstellen eines Versorgungsdrucks (34) umfasst,
**dadurch gekennzeichnet, dass**
die erste Ventilanordnung (120a) und die zweite Ventilanordnung (120b) jeweils ein jeweiliges zweites Ventil (122a, 122b) beinhalten, das dazu konfiguriert ist, den Versorgungsdruck (34) als ersten Druck (141a) bzw. als zweiten Druck (141b) bereitzustellen.

10. Redundantes Steuersystem (100) nach einem der vorstehenden Ansprüche, das weiter eine Auslassöffnung (176) umfasst,
**dadurch gekennzeichnet, dass**
die erste Ventilanordnung (120a) und die zweite Ventilanordnung (120b) jeweils ein jeweiliges drittes Ventil (123a, 123b) beinhalten, das dazu konfiguriert ist, den ersten Druck (141a) bzw. den zweiten Druck (141b) über die Auslassöffnung (176) auszulassen.

11. Redundantes Steuersystem (100) nach einem der vorstehenden Ansprüche, wobei das Fahrzeug ein erstes Relaisventil (180a) umfasst, das dazu konfiguriert ist, einen ersten Bremsdruck (48a) an den ersten Bremsaktuator (2a) bereitzustellen, und ein zweites Relaisventil (180b), das dazu konfiguriert ist, einen zweiten Bremsdruck (48b) an den zweiten Bremsaktuator (2b) bereitzustellen,
**dadurch gekennzeichnet, dass**
der erste Förderdruck (143a) dazu konfiguriert ist, das erste Relaisventil (180a) zu steuern, um den ersten Bremsdruck (48a) an den ersten Bremsaktuator (2a) bereitzustellen, und der zweite Förderdruck (143b) dazu konfiguriert ist, das zweite Relaisventil (180b) zu steuern, um den zweiten Bremsdruck (48b) an den zweiten Bremsaktuator (2b) bereitzustellen.

12. Redundantes Steuersystem (100) nach Anspruch 8,
**dadurch gekennzeichnet, dass**
die erste Ventilanordnung (120a) und die zweite Ventilanordnung (120b) jeweils ein Rückschlagventil (125a, 125b) beinhalten.

13. Redundantes Steuersystem (100) nach einem der Ansprüche 8 bis 12,
**dadurch gekennzeichnet, dass**
das redundante Steuersystem (100) mindestens eines der Folgenden umfasst:
- einen ersten Steuerdrucksensor (162a) zum Bereitstellen eines Steuerdruckwerts an die erste elektronische Steuereinheit (110a);
- einen zweiten Steuerdrucksensor (162b) zum Bereitstellen des Steuerdruckwerts an die zweite elektronische Steuereinheit (110b);
- einen ersten Versorgungsdrucksensor (164a) zum Bereitstellen eines Versorgungsdruckwerts an die erste elektronische Steuereinheit (110a);
- einen zweiten Bremsversorgungsdrucksensor (164b) zum Bereitstellen des Versorgungsdruckwerts an die zweite elektronische Steuereinheit (110b);
- einen ersten Bremsdrucksensor (168a) zum Bereitstellen eines Druckwerts an dem ersten Bremsaktuator (2a) an die erste elektronische Steuereinheit (110a);
- einen zweiten Bremsdrucksensor (168b) zum Bereitstellen eines Druckwerts an dem zweiten Bremsaktuator (2b) an die zweite elektronische Steuereinheit (110b).

14. Bremssystem für ein Nutzfahrzeug, das einen ersten Bremsaktuator (2a) und einen zweiten Bremsaktuator (2b) umfasst,
**gekennzeichnet durch**
ein redundantes Steuersystem (100) nach einem der Ansprüche 1 bis 13.

15. Verfahren zum redundanten Steuern eines ersten Förderdrucks (143a) für einen ersten Bremsaktuator (2a) und eines zweiten Förderdrucks (143b) für einen zweiten Bremsaktuator (2b) eines Fahrzeugs, wobei das Fahrzeug eine erste elektronische Steuereinheit (110a), eine erste Ventilanordnung (120a), die von der ersten elektronischen Steuereinheit (110a) gesteuert wird und dazu konfiguriert ist, einen ersten Druck (141a) bereitzustellen, eine zweite elektronische Steuereinheit (110b) und eine zweite Ventilanordnung (120b), die von der zweiten elektronischen Steuereinheit (110b) gesteuert wird und dazu konfiguriert ist, einen zweiten Druck (141b) bereitzustellen, umfasst, wobei das Verfahren Folgendes umfasst:
Bereitstellen (S110) des ersten Drucks (141a) mittels der ersten Ventilanordnung (120a) und gesteuert durch die erste elektronische Steuereinheit (110a);
Bereitstellen (S120) des zweiten Drucks (141b) mittels der zweiten Ventilanordnung (120b) und gesteuert durch die zweite elektronische Steuereinheit (110b);
**gekennzeichnet durch**
Auswählen (S130), gesteuert durch die erste elektronische Steuereinheit (110a), des ersten Drucks (141a) oder des zweiten Drucks (141b) als den zweiten Förderdruck (143b); und
Auswählen (S140), gesteuert durch die zweite elektronische Steuereinheit (110b), des ersten Drucks (141a) oder des zweiten Drucks (141b) als den ersten Förderdruck (143a).

## Revendications

1. Système de commande redondante (100) pour commander une première pression de distribution (143a) pour un premier actionneur de frein (2a) et une seconde pression de distribution (143b) pour un second actionneur de frein (2b) d'un véhicule, le système de commande redondante (100) comprenant :
une première unité de commande électronique (110a) ;
un premier ensemble vanne (120a), commandé par la première unité de commande électronique (110a) et configuré pour fournir une première pression (141a) ;
une seconde unité de commande électronique (110b) ;
un second ensemble vanne (120b), commandé par la seconde unité de commande électronique (110b) et configuré pour fournir une seconde pression (141b) ;
selon lequel le système de commande redondante comprend en outre :
une première vanne sélectrice (130a), commandée par la première unité de commande électronique (110a), configurée pour fournir la seconde pression de distribution (143b) en sélectionnant soit la première pression (141a), soit la seconde pression (141b) ; et
une deuxième vanne sélectrice (130b), commandée par la seconde unité de commande électronique (110b), configurée pour fournir la première pression de distribution (143a) en sélectionnant soit la première pression (141a), soit la seconde pression (141b).

2. Système de commande redondante (100) selon la revendication 1,
**caractérisé en ce que :**
- la première vanne sélectrice (130a) est configurée pour adopter un état activé afin de sélectionner la première pression (141a), et un état non activé afin de sélectionner la seconde pression (141b), et/ou
- la deuxième vanne sélectrice (130b) est configurée pour adopter un état activé afin de sélectionner la seconde pression (141b), et un état non activé afin de sélectionner la première pression (141a).

3. Système de commande redondante (100) selon l'une des revendications précédentes,
**caractérisé en ce que**
la première unité de commande électronique (110a) est configurée pour détecter un dysfonctionnement dans le système de commande redondante (100) et pour commander la première vanne sélectrice (130a) pour sélectionner la première pression (141a) après avoir détecté le dysfonctionnement, et la seconde unité de commande électronique (110b) est configurée pour détecter un dysfonctionnement dans le système de commande redondante (100) et pour commander la seconde vanne sélectrice (130b) afin de sélectionner la seconde pression (141b) après avoir détecté le dysfonctionnement.

4. Système de commande redondante (100) selon l'une des revendications précédentes,
**caractérisé en ce que**
la première unité de commande électronique (110a) et la seconde unité de commande électronique (110b) sont configurées pour communiquer l'une avec l'autre.

5. Système de commande redondante (100) selon l'une des revendications précédentes,
**caractérisé en ce que**
la première unité de commande électronique (110a) est configurée pour détecter comme dysfonctionnement au moins l'un des éléments suivants :
- une panne d'une alimentation électrique de la seconde unité électronique de commande (110b),
- un signal de panne provenant de la seconde unité de commande électronique (110b),
- une absence de signal de la seconde unité électronique de commande (110b),
- un désaccord entre une valeur de la seconde pression (141b) obtenue auprès de la seconde unité électronique de commande (110b) et une valeur mesurée de la seconde pression (141b),
et dans lequel la seconde unité de commande électronique (110b) est configurée d'une manière correspondante.

6. Système de commande redondante selon l'une des revendications précédentes,
**caractérisé en ce que**
la première unité de commande électronique (110a) est configurée pour générer un signal de panne dans au moins un des cas suivants :
- une panne d'au moins une vanne (121a, 122a, 123a, 125a) dans le premier ensemble vanne (120a),
- un défaut dans les données de capteur d'un capteur, dans lequel le capteur fournit les données de capteur à la première unité de commande électronique (110a),
- une panne interne dans la première unité de commande (110a),
dans lequel la seconde unité de commande électronique (110b) est configurée de manière correspondante.

7. Système de commande redondante (100) selon l'une des revendications précédentes, dans lequel le premier actionneur de frein (2a) est configuré pour freiner une première roue du véhicule et le second actionneur de frein (2b) est configuré pour freiner une seconde roue du véhicule, le système de commande redondante (100) étant
**caractérisé en ce que**
- la première unité de commande électronique (110a) est configurée pour recevoir des données de vitesse de roue provenant d'un premier capteur de vitesse de roue (191a), et la seconde unité de commande électronique (110b) est configurée pour recevoir des données de vitesse de roue provenant d'un second capteur de vitesse de roue (191b), dans lequel le premier capteur de vitesse de roue (191a) et le second capteur de vitesse de roue (191b) sont tous deux conçus pour mesurer une vitesse de roue de la première roue, ou
- la première unité de commande électronique (110a) et la seconde unité de commande électronique (110b) sont configurées pour recevoir toutes deux des données de vitesse de roue provenant d'un même capteur de vitesse de roue (191a), conçu pour mesurer une vitesse de roue de la roue, et dans lequel une configuration analogue est mise en place pour la seconde roue.

8. Système de commande redondante (100) selon l'une des revendications précédentes, comprenant en outre un orifice de pression de commande (172) pour fournir une pression de commande (32),
**caractérisé en ce que**
le premier ensemble vanne (120a) et le second ensemble vanne (120b) incluent chacun une première vanne (121a, 121b) respective configurée pour fournir la pression de commande (32) en tant que première pression (141a) et en tant que seconde pression (141b), respectivement.

9. Système de commande redondante (100) selon l'une des revendications précédentes, comprenant en outre un orifice de pression d'alimentation (174) pour apporter une pression d'alimentation (34),
**caractérisé en ce que**
le premier ensemble vanne (120a) et le second ensemble vanne (120b) incluent chacun une deuxième vanne (122a, 122b) respective configurée pour fournir la pression d'alimentation (34) en tant que première pression (141a) et en tant que seconde pression (141b), respectivement.

10. Système de commande redondante (100) selon l'une des revendications précédentes comprenant en outre un orifice d'évacuation (176),
**caractérisé en ce que**
le premier ensemble vanne (120a) et le second ensemble vanne (120b) incluent chacun une troisième vanne (123a, 123b) respective configurée pour évacuer la première pression (141a) et la seconde pression (141b), respectivement, via l'orifice d'évacuation (176).

11. Système de commande redondante (100) selon l'une des revendications précédentes, dans lequel le véhicule comprend une première vanne relais (180a) configurée pour fournir une première pression de freinage (48a) au premier actionneur de frein (2a), et une seconde vanne relais (180b) configurée pour fournir une seconde pression de freinage (48b) au second actionneur de frein (2b),
**caractérisé en ce que**
la première pression de distribution (143a) est configurée pour commander la première vanne relais (180a) en fournissant la première pression de freinage (48a) au premier actionneur de frein (2a), et la seconde pression de distribution (143b) est configurée pour commander la seconde vanne relais (180b) pour fournir la seconde pression de freinage (48b) au second actionneur de frein (2b).

12. Système de commande redondante (100) selon la revendication 8,
**caractérisé en ce que**
le premier ensemble vanne (120a) et le second ensemble vanne (120b) incluent chacun un clapet anti-retour (125a, 125b).

13. Système de commande redondante (100) selon l'une des revendications 8 à 12,
**caractérisé en ce que**
le système de commande redondante (100) comprend au moins l'un des éléments suivants :
- un premier capteur de pression de commande (162a) pour fournir une valeur de pression de commande à la première unité de commande électronique (110a) ;
- un second capteur de pression de commande (162b) pour fournir la valeur de pression de commande à la seconde unité de commande électronique (110b) ;
- un premier capteur de pression d'alimentation (164a) pour fournir une valeur de pression d'alimentation à la première unité de commande électronique (110a) ;
- un second capteur de pression d'alimentation de frein (164b) pour fournir la valeur de pression d'alimentation à la seconde unité de commande électronique (110b) ;
- un premier capteur de pression de freinage (168a) pour fournir une valeur de pression au niveau du premier actionneur de frein (2a) à la première unité de commande électronique (110a) ;
- un second capteur de pression de freinage (168b) pour fournir une valeur de pression au niveau du second actionneur de frein (2b) à la seconde unité de commande électronique (110b).

14. Système de freinage pour un véhicule utilitaire, comprenant un premier actionneur de frein (2a) et un second actionneur de frein (2b),
**caractérisé par**
un système de commande redondante (100) selon l'une des revendications 1 à 13.

15. Procédé de commande redondante d'une première pression de distribution (143a) pour un premier actionneur de frein (2a) et d'une seconde pression de distribution (143b) pour un second actionneur de frein (2b) d'un véhicule, dans lequel le véhicule comprend une première unité de commande électronique (110a), un premier ensemble vanne (120a), commandé par la première unité de commande électronique (110a) et configuré pour fournir une première pression (141a), une seconde unité de commande électronique (110b) et un second ensemble vanne (120b), commandé par la seconde unité de commande électronique (110b) et configuré pour fournir une seconde pression (141b), le procédé comprenant :
la fourniture (S110), au moyen du premier ensemble vanne (120a) et commandée par la première unité de commande électronique (110a), de la première pression (141a) ;
la fourniture (S120), au moyen du second ensemble vanne (120b) et commandée par la seconde unité de commande électronique (110b), de la seconde pression (141b) ;
**caractérisé par**
la sélection (S130), commandée par la première unité de commande électronique (110a), de la première pression (141a) ou de la seconde pression (141b) en tant que seconde pression de distribution (143b) ; et
la sélection (S140), commandée par la seconde unité de commande électronique (110b), de la première pression (141a) ou de la seconde pression (141b) en tant que première pression de distribution (143a).
